# EUROPÄISCHE PATENTANMELDUNG

(11) **EP 1 670 178 A1**
(43) Veröffentlichungstag der Anmeldung: **14.06.2006**
(21) Anmeldenummer: 05111389.2
(22) Anmeldetag: 28.11.2005
(51) Int. Cl.: H04L 12/26

(54) **Schnittstelle, System und Verfahren zur Fernüberwachung einer Einrichtung in einem Gebäude**

(30) Priorität: 10.12.2004 EP 04106492
(71) Anmelder: INVENTIO AG, 6052 Hergiswil (CH)
(72) Erfinder: Schuster, Kilian, 6275, Ballwil (CH)
(74) Vertreter: Gaussmann, Andreas

(57) **Zusammenfassung**

Die Erfindung betrifft eine Schnittstelle (17), ein System und ein Verfahren zur Fernüberwachung von mindestens einer Einrichtung (11, 12) in mindestens einem Gebäude (1), die Schnittstelle (17) weist mindestens einen Eingang für erste Signale von der bzw. zur Einrichtung (11, 12) auf, die Schnittstelle (17) weist mindestens einen Ausgang für zweite Signale von bzw. zu mindestens einem Fernmeldenetz (16, 24), die Schnittstelle (17) weist mindestens einen Prozessor auf, der Prozessor führt mindestens eine aktivierte Fernüberwachungs-Funktion aus. Mindestens eine Fernüberwachungs-Zentrale (20) ist über das Fernmeldenetz (16, 24) mit der Schnittstelle (17) verbunden.

## Beschreibung

Die Erfindung betrifft eine Schnittstelle, ein System und ein Verfahren zur Fernüberwachung einer Einrichtung in einem Gebäude gemäss der Definition der Patentansprüche.

Der Begriff Gebäudetechnik umfasst technische Einrichtungen für Gebäude und für das Gebäudeumfeld. Als Beispiele solcher Einrichtungen seien genannt: Zutrittskontrollanlagen zu Gebäuden bzw. zu Räumen in Gebäuden; Heizungs-, Lüftungs- und Klimaanlagen in Gebäuden; Gefahrenmeldeanlagen zum Erkennen und Melden von Einbruch, Diebstahl, Schaden durch Feuer, Rauch und Wasser; Anlagen zum Führen von Personen in Gebäuden; Haushaltsgeräte in Küche und Bad; Geräte zur Darbietung von Multimedia (Audio, Video) und zur Text- und Datenverarbeitung; aber auch die Vernetzung solcher Anlagen und Geräte in Gebäuden; die Auswertung von Daten, welche von solchen Anlagen und Geräten erfasst werden; usw..

Nun besteht der Wunsch, solche Einrichtungen aus der Ferne zu konfigurieren, zu überwachen und zu warten. Es ist bekannt, derartige Einrichtungen hierzu mit Modems zu versehen und über ein Fernmeldenetz aus der Ferne anzusteuern. Nachteilig hieran ist, dass jede Einrichtung mit einem Modem zu versehen ist und dass die Einrichtung über dieses Modem einzeln aufzurufen ist. Zudem weisen die Einrichtungen vielfältige, oft proprietäre Ansteuerungen auf. Jede dieser proprietären Ansteuerungen von Einrichtungen muss der Fernüberwachungs-Zentrale bekannt sein, damit diese die Befehle in einer für die Einrichtungen verständlichen Form übermitteln kann. All dies verunmöglicht den Zugriff aus der Ferne und verursacht enormen Aufwand.

Aufgabe der vorliegenden Erfindung ist es, eine Schnittstelle, ein System und ein Verfahren zur Fernüberwachung einer Einrichtung in einem Gebäude anzugeben, die eine kostengünstige Überwachung bzw. Steuerung von technischen Einrichtungen in Gebäuden ermöglicht.

Diese Aufgabe wird durch die in den Patentansprüchen definierte Erfindung gelöst.

Erfindungsgemäss weisen die Schnittstelle und das Verfahren zur Fernüberwachung von mindestens einer Einrichtung in mindestens einem Gebäude eine Schnittstelle mit mindestens einen Eingang für erste Signale von der bzw. zur Einrichtung auf. Auch weist die Schnittstelle mindestens einen Ausgang für zweite Signale von bzw. zu mindestens einem Fernmeldenetz auf. Ferner weist die Schnittstelle weist mindestens einen Prozessor zur Ausführung von mindestens einer aktivierten Fernüberwachungs-Funktion auf. Darüber hinaus weist das erfindungsgemässe System mindestens eine Fernüberwachungs-Zentrale auf, die über das Fernmeldenetz mit der Schnittstelle verbunden ist.

Der Vorteil der Erfindung liegt darin, dass die Einrichtung des Gebäudes aus der Ferne z.B. über das Fernmeldenetz mittels der Fernüberwachungs-Funktion der Schnittstelle ansprechbar ist und Daten übermittelbar sind. Hierbei ermöglichen standardisierte zweite Signale eine einfache und allgemein verständliche Kommunikation der Schnittstelle mit der Fernüberwachungszentrale. Als Standard der zweiten Signale dient dabei die Sprache der Fernüberwachungszentrale, während die ersten Signale der Einrichtung in einer beliebigen anderen proprietären Sprache dieser Einrichtung vorliegen können. Es ist somit die Fernüberwachungs-Funktion, welche zwischen diesen Sprachen vermittelt. Die Fernüberwachungs-Funktion umfasst diagnostische Daten, die einen bestimmten Teil oder eine Funktion der Einrichtung betreffen, welche an die Fernüberwachungs-Zentrale übermittelbar und dort weiterverarbeitbar sind.

Vorteilhafterweise werden mehrere Einrichtungen über ein Modem der Schnittstelle von der Fernüberwachungs-Zentrale gewartet.

Dies hat den Vorteil, dass für die Fernwartung von mehreren Einrichtungen des Gebäudes nur ein einziges Modem nötig ist.

Vorteilhafterweise wertet eine aktivierte Fernüberwachungs-Funktion erste Signale der Einrichtung aus und gibt ein dem Ergebnis der Auswertung entsprechendes zweites Signal an das Fernmeldenetz aus. Vorteilhafterweise wertet eine aktivierte Fernüberwachungs-Funktion zweite Signale des Fernmeldenetzes aus und gibt ein dem Ergebnis der Auswertung entsprechendes erstes Signal an die Einrichtung aus. Vorteilhafterweise werden zweite Signale auch von mindestens einem Sensor bzw. mindestens einem Stellglied im Gebäude empfangen bzw. an solch einen Sensor bzw. solch ein Stellglied ausgegeben.

Dies hat den Vorteil, dass Daten mono- bzw. bidirektional übermittelbar sind. Werden die Daten nur an die Fernüberwachungs-Zentrale übermittelt, so ist die Fernüberwachungs-Funktion monodirektional. Werden Daten hingegen nach erfolgter Auswertung in der Fernüberwachungs-Zentrale von der Fernüberwachungs-Zentrale zurück an die Einrichtung übermittelt, so ist die Fernüberwachungs-Funktion bidirektional.

Vorteilhafterweise konfiguriert bzw. überwacht bzw. wartet die Fernüberwachungs-Funktion Hardware bzw. Software der Einrichtung. Vorteilhafterweise konfiguriert sich die Schnittstelle nach Inbetriebnahme automatisch bzw. lernt von selbst, welchem Eingang bzw. Ausgang welches Signal entspricht.

Dies hat den Vorteil, dass die Verfügbarkeit der Einrichtung jederzeit von der Fernüberwachungs-Zentrale kontrollierbar ist und frühzeitig, d.h. präventiv Massnahmen zur Aufrechterhaltung der Verfügbarkeit unternommen werden können.

Vorteilhafterweise weist die Schnittstelle mindestens einen Datenspeicher auf, in welchem Datenspeicher mehrere Fernüberwachungs-Funktionen gespeichert sind, so dass eine Fernüberwachungs-Funktion durch Laden aus dem Datenspeicher in den Prozessor aktivierbar ist.

Vorteilhafterweise sind für verschiedene proprietäre Einrichtungen verschiedene dedizierte Fernüberwachungs-Funktionen vorgesehen, wobei für jede an einen Eingang der Schnittstelle angeschlossene proprietäre Einrichtung eine dedizierte Fernüberwachungs-Funktion durch Laden in den Prozessor aktiviert ist.

Vorteilhafterweise werden über das Fernmeldenetz standardisierte zweite Signale zwischen der Schnittstelle und mindestens einer Fernüberwachungs-Zentrale übermittelt.

Dies hat den Vorteil, dass die Einrichtung von der Fernüberwachungs-Zentrale aus mit standardisierten Routinen in der Sprache der Fernüberwachungs-Zentrale ansprechbar ist, da die dedizierte Fernüberwachungs-Funktion Daten der einzelnen proprietären Einrichtungen für diese Routinen in für diese Einrichtungen verständlicher Form bereitstellen. Die dedizierte Fernüberwachungs-Funktion übersetzt bzw. wertet erste Signale der Einrichtung so aus, dass diese von standardisierten Routinen verstanden, d.h. als standardisierte zweite Signale von der Fernüberwachungs-Zentrale verstanden wird. Umgekehrt übersetzt bzw. wertet die Fernüberwachungs-Funktion standardisierte zweite Signale der Fernüberwachungs-Zentrale so aus, dass diese von der Einrichtung als proprietäre Befehle in Form von ersten Signalen verstanden werden.

Vorteilhafterweise sind an einer Vielzahl von Eingängen mehrere Einrichtungen bzw. Sensoren bzw. Stellglieder angeschlossen und jeder Einrichtung ist eine entsprechende Fernüberwachungs-Funktionen zugeordnet. Vorteilhafterweise sind verschiedenste Einrichtungen bzw. Sensoren bzw. Stellglieder an die Schnittstelle angeschlossen, wie: Zutrittskontrollanlagen zu Gebäuden bzw. zu Räumen in Gebäuden bzw. Heizungs-, Lüftungs- und Klimakontrollanlagen in Gebäuden bzw. Gefahrenmeldeanlagen zum Erkennen und Melden von Einbruch, Diebstahl, Schaden durch Feuer, Rauch und Wasser bzw. Anlagen zum Führen von Personen in Gebäuden bzw. Geräte in Küche und Bad bzw. Geräte zur Darbietung von Multimedia bzw. Geräte zur Text- und Datenverarbeitung bzw. Netzwerkadapter.

Vorteilhafterweise ist die Schnittstelle in einem Gehäuse bzw. einem Kabel bzw. einem intelligenten Stecker dissimuliert.

Vorteilhafterweise ist die Schnittstelle modular aufgebaut, wobei verschiedene Module für Eingänge bzw. Ausgänge bzw. den Prozessor bzw. einen Datenspeicher sowie ein Bus-Modul in einen Steckrahmen einschiebbar sind und das Bus-Modul eine Kommunikation zwischen den Modulen ermöglicht.

Die Erfindung wird im Folgenden in Ausführungsbeispielen anhand von Figuren im Detail beschrieben. Es zeigt:
Fig. 1 eine schematische Darstellung des Systems mit einem von einer Fernüberwachungs-Zentrale über ein Fernmeldenetz und einer Schnittstelle ferngesteuerten Gebäude mit Einrichtungen,
Fig. 2 eine Ansicht eines ersten Ausführungsbeispiels der Schnittstelle in Form eines Gehäuses zur Verwendung im System gemäss Fig. 1,
Fig. 3 ein beispielhaftes Blockdiagramm einer Konfiguration von USB Steckern und Adaptern, die an der Schnittstelle zur Verwendung im System gemäss Fig. 1 angeschlossen sind,
Fig. 4 eine Ansicht eines zweiten Ausführungsbeispiels der Schnittstelle in Form eines Kabels oder Steckers zur Verwendung im System gemäss Fig. 1, und
Fig. 5 eine Ansicht eines dritten Ausführungsbeispiels der Schnittstelle mit mehreren Modulen zur Verwendung im System gemäss Fig. 1.

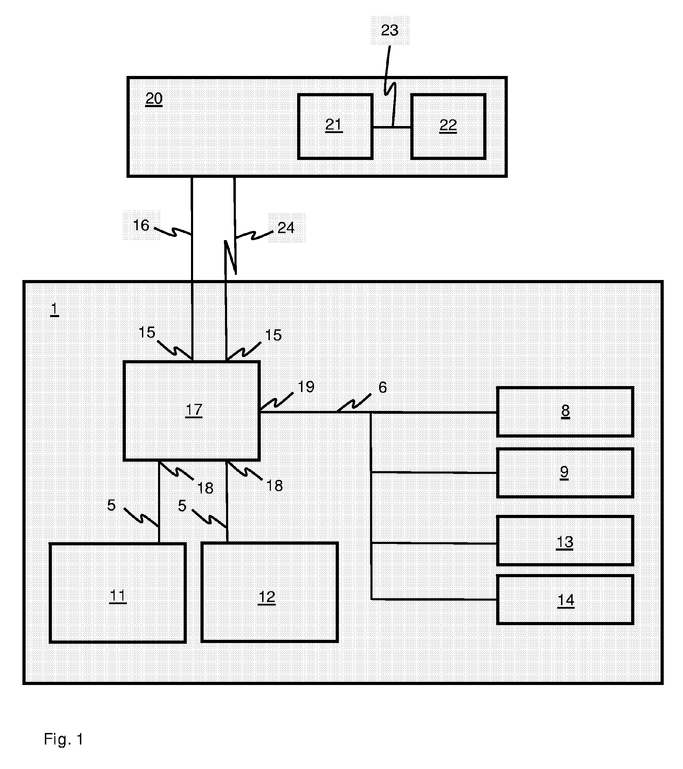

Fig. 1 zeigt schematisch ein Gebäude 1, das über ein Fernmeldenetz 16 mit einer Fernüberwachungs-Zentrale 20 verbunden ist. Das Fernmeldenetz 16 kann ein beliebiges öffentliches bzw. privates Festnetz sein. Festnetze setzen eine physische, auf Verkabelung basierende Verbindung (z.B. metallische Leiter oder Lichtwellenleiter) zwischen den kommunizierenden technischen Einheiten voraus. Bekannt sind vier festnetzbasierte Varianten, das Telefonnetz, das Fernsehkabelnetz, das Stromnetz sowie Standleitungen. Für die Übertragung von Daten aus dem Internet bzw. Intranet kommt häufig das Telefonnetz zum Einsatz. Im Gebäude 1 ist eine Schnittstelle 17 über einen Ausgang 15 an das Fernmeldenetz 16 angeschlossen. Die Schnittstelle 17 ist über mehrere Eingänge 18, 19 mit Einrichtungen 11, 12 bzw. Sensoren 8, 9 bzw. Stellglieder 13, 14 im Gebäude 1 verbunden. Die Verbindungen der Einrichtungen 11, 12 bzw. Sensoren 8, 9 bzw. Stellglieder 13, 14 zur Schnittstelle 17 können in beliebiger Weise parallel oder in Reihe geschaltet sein. Die Verbindungen zum Fernmeldenetz 16 bzw. zu den Einrichtungen 11, 12 bzw. Sensoren 8, 9 bzw. Stellglieder 13, 14 kann über SignalLeitungen 5, 6 in Form von Kabeln oder auch schnurlos erfolgen.

Vielfältige Einrichtungen 11, 12 können an die Schnittstelle 17 angeschlossen werden. Als Beispiele solche Einrichtungen 11, 12 seien genannt: Zutrittskontrollanlagen zu Gebäuden bzw. zu Räumen in Gebäuden; Heizungs-, Lüftungs- und Klimaanlagen in Gebäuden; Gefahrenmeldeanlagen zum Erkennen und Melden von Einbruch, Diebstahl, Schaden durch Feuer, Rauch und Wasser; Anlagen zum Führen von Personen in Gebäuden; Haushaltsgeräte in Küche und Bad wie Waschmaschinen, Spülmaschinen usw. (weisse Ware); Geräte zur Darstellung von Ton und Bild (Bildschirme, Lautsprecher, Radio- bzw. Fernsehempfänger, CD-Spieler, Festplatten, Kameras, Telefone, usw.) und zur Text- und Datenverarbeitung; aber auch die Vernetzung (Ethernet, WLAN, usw.) solcher Anlagen und Geräte in Gebäuden und im Gebäudeumfeld; die Auswertung von Daten, welche von solchen Anlagen und Geräten erfasst werden; usw..

Entsprechende Sensoren 8, 9 sowie Stellglieder 13, 14 lassen sich in analoger Weise an die Schnittstelle 17 anschliessen. Beispiele für Sensoren 8, 9 sind handelsübliche Sensoren für Temperatur, Druck, Luftfeuchtigkeit, biometrische Benutzerdaten, sowie Detektoren für elektromagnetische Strahlung aller Art, Bewegungsmelder, Rauchmelder, usw.. Beispiele für Stellglieder 13, 14 sind handelsübliche Stellglieder wie optische- und akustische Anzeigegeräte, Telefone, Alarmgeber, aber auch Stellglieder um Türen zu öffnen bzw. zu schliessen bzw. zu entriegeln bzw. zu verriegeln, usw..

Eine aktivierte Fernüberwachungs-Funktion der Schnittstelle 17 empfängt von den Einrichtungen 11, 12 bzw. Sensoren 8, 9 bzw. Stellglieder 13, 14 erste Signale, wertet diese ersten Signale aus bzw. übersetzt diese ersten Signale und gibt dem Ergebnis der Auswertung entsprechende zweite Signale an das Fernmeldenetz 16, 24 aus.

Die Fernüberwachungs-Zentrale 20 kann die Einrichtungen 11, 12 bzw. Sensoren 8, 9 bzw. Stellglieder 13, 14 im Gebäude 1 somit aus der Ferne konfigurieren, überwachen und sogar warten. Sie setzt sich aus einem Rechnersystem 21 und aus einer Datenbank 22 in der betriebszustandsrelevante Daten abgelegt werden zusammen. Das Rechnersystem 21 und die Datenbank 22 sind über einen Datenbus 23 verbunden. Über den Datenbus 23 können mit Hilfe zusätzlicher Datenverarbeitungseinrichtungen entweder die in der Datenbank 22 abgelegten Daten und/oder aktuelle Betriebsdaten der Einrichtungen 11, 12 bzw. Sensoren 8, 9 bzw. Stellglieder 13, 14 abgerufen und zur zusätzlichen Auswertung weiterverarbeitet werden.

Die von der Schnittstelle 17 über das Fernmeldenetz 16, 24 übertragenen zweiten Signale werden in der Fernüberwachungs-Zentrale 20 im Rechnersystem 21 verarbeitet. Das Rechnersystem 21 leitet aus den empfangenen Informationen auch die Befehle zum Betrieb der Einrichtungen 11, 12 bzw. Sensoren 8, 9 bzw. Stellglieder 13, 14 ab. Solche Befehle werden von der Fernüberwachungs-Zentrale 20 als zweite Signale an die Schnittstelle 17 übermittelt. Die Schnittstelle 17 wertet diese zweiten Signale aus bzw. übersetzt diese zweiten Signale und gibt dem Ergebnis der Auswertung entsprechende erste Signale als Befehle an Einrichtungen 11, 12 weiter bzw. steuert Sensoren 8, 9 bzw. Stellglieder 13, 14.

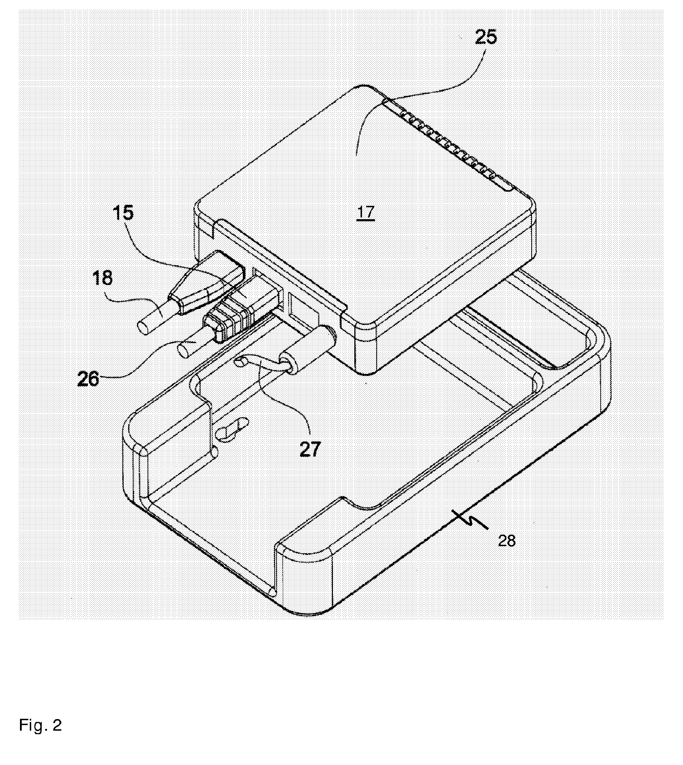

Fig. 2 zeigt eine Ansicht einer ersten Ausführungsform der Schnittstelle 17 in Form eines Gehäuses 25. Das Gehäuse 25 dient als Hülle und beinhaltet einen Prozessor (CPU, Central Processing Unit) und einen Datenspeicher, die in der Figur nicht aufgezeichnet sind. Der Eingang 18 des Gehäuses 25 besteht aus einem Sensorbus, bspw. USB (Universal Serial Bus), der die von den Sensoren 8, 10, 11 generierten Signale überträgt. Der Ausgang 15 des Gehäuses 25 besteht aus einem Telecombus 26, zum Beispiel RJ45, der Signale an das Fernmeldenetz 16, 24 übermittelt. Die notwendige elektrische Energie wird bspw. durch den Steckernetzteil 27 versorgt. Ein weiterer nicht gezeigter Ausgang ermöglicht einen direkten Zugriff an der CPU und an dem Datenspeicher des Gehäuses 25 durch eine Recheneinheit (PC). Ein weiterer nicht gezeigter Eingang übermittelt serielle Signale einer Einrichtung 11, 12 direkt an das Gehäuse 25. Das Gehäuse 25 steckt in eine Halterung 28, um so einfach und schnell montiert und demontiert zu werden.

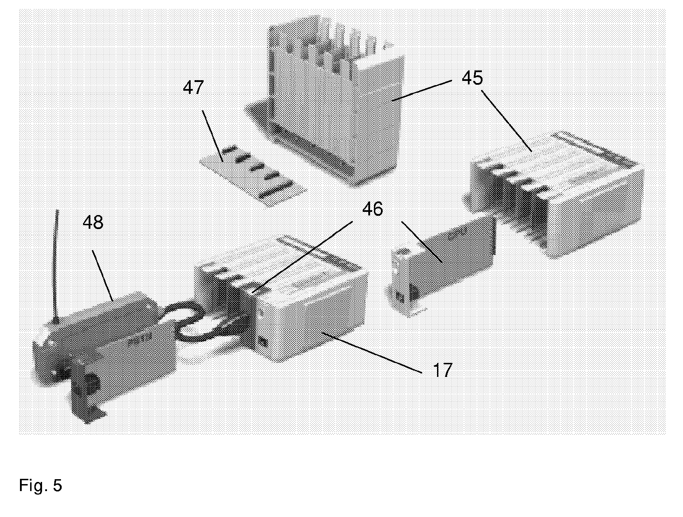

Im Ausführungsbeispiel gemäss Fig. 2 sind die Eingänge 18 der Schnittstelle 17 als USB Stecker realisiert. Die KabelVerbindungen sind übersichtlich und sicher an entsprechenden Eingängen 18 und Ausgänge 15 der Schnittstelle 17 angebracht, was die Anwendung von Markierungssystemen dieser Eingänge 18 und Ausgänge 15 verlangt. Charakteristisch ist ein zentraler Kabelkanal für die Kabelzuführung (siehe auch den Steckrahmen 45 gemäss Fig. 5). Diese zugeführten Kabel werden, über die Markierungs- und Führungslogik in der Schnittstelle 17, in Eingangs- und Ausgangskanäle aufgeteilt. Die Kabelführung in der Schnittstelle 17 sieht auch Zugentspannungsgeometrien zur Zugentlastung und Stützflächen vor, wo Kabel aufliegen, um Bruche zu vermeiden. Für jeden Eingang der Schnittstelle 17 kann ein LED vorgesehen werden, dessen Blinken bestätigt, ob der Eingang richtig funktioniert oder nicht und eine rasche optische Kontrolle der Funktionalität der Schnittstelle 17 bzw. des aktuellen Zustandes des gesamten Gebäudes 1 ermöglicht. Ein Temperatursensor wird vorzugsweise in der Schnittstelle 17 vorgesehen, um Hitzschaden zu vermeiden.

Vorzugsweise konfiguriert sich die Schnittstelle 17 während der Inbetriebnahme automatisch und lernt von selbst, welcher Eingang 18, 19 bzw. Ausgang 15 welchem Signal entspricht. Bspw. misst die Schnittstelle 17 die an Eingängen 18, 19 ankommenden Signale und kann dadurch jedem Eingang 18, 19 ein entsprechendes physikalisches Signal des Gebäudes 1 zuteilen. Die Schnittstelle 17 führt auch einen Plausibilitätstest der Zuteilung der Signale an die Eingänge 18, 19 aus. Damit werden Logik-Fehler in der Verkabelung automatisch erkannt, kenntlich gemacht und lassen sich so einfach und rasch korrigieren.

Die Schnittstelle 17 kann über einen Bus mit weiteren Schnittstellen 17 kommunizieren, wodurch eine Hub-Funktion realisiert wird. Ein Hub (Verkehrsknotenpunkt) ermöglicht eine Weiterleitung von Signalen und Daten zwischen Schnittstellen. Dieses modulare Konzept erlaubt dem Fachmann bei Kenntnis der vorliegenden Erfindung grosse Erweiterungsmöglichkeiten der Schnittstelle 17. Die Schnittstelle 17 kann auch automatisch Blinklichter im Gebäude 1 betätigen, Anzeige und Texte zusammenstellen und zeigen und Signalisierungselemente aktivieren.

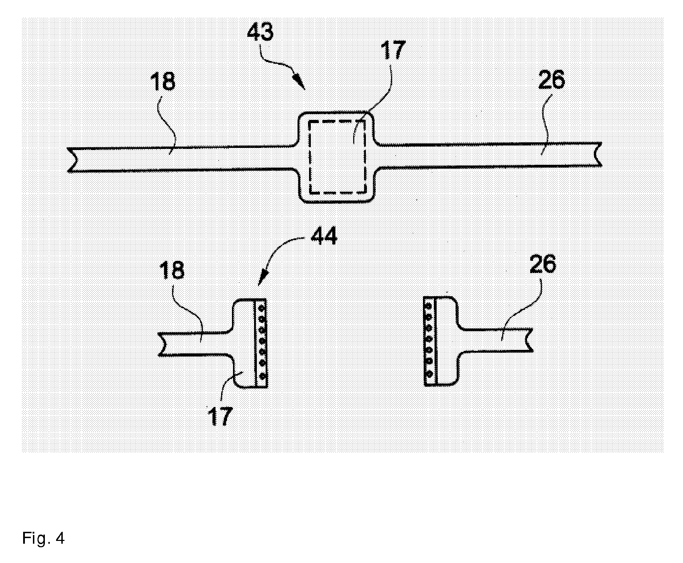

Wie im zweiten Ausführungsbeispiel gemäss Fig. 4 dargestellt, kann die Schnittstelle 17 auch die Form eines intelligenten Kabels oder eines intelligenten Steckers annehmen. Sie ist möglichst kostengünstig, klein, einfach nachrüstbar, montierbar und demontierbar und kann an einem beliebigen Ort im Gebäude 1 angebracht werden. Diese Ausführungsform als intelligenter Stecker oder intelligentes Kabel ermöglicht ein komplettes bzw. teilweise Dissimulieren und Verstecken der Fernüberwachungs-Funktionen und integrierten Schaltungen der Schnittstelle 17. Auch wird so eine fälschungssichere Fernüberwachung von Einrichtungen 11, 12 ermöglicht, bei der nur autorisierte und kompetente Wartungstechniker die Schnittstelle 17 erkennen um bspw. Fernüberwachungs-Funktionen ein- oder auszuschalten.

Ungewöhnliche durch die Schnittstelle 17 detektierte Zustände im Gebäude 1 können der Fernüberwachungs-Zentrale 20 unmittelbar gemeldet werden. Die Fernüberwachungs-Zentrale 20 ist so organisiert, dass sie sofort nach einer Störungsmeldung versucht die Verfügbarkeit der Einrichtungen 11, 12 bzw. Sensoren 8, 9 bzw. Stellglieder 13, 14 wiederherzustellen. Bspw. erteilt sie einem Wartungstechniker einen Auftrag, eine Einrichtung 11, 12 bzw. Sensoren 8, 9 bzw. Stellglieder 13, 14 so bald wie möglich zu reparieren. Somit ist ein DiagnoseSystem integriert, welches als Expertensystem eine effektive und effiziente Problembehebung sowie Wartung der Einrichtung 11, 12 bzw. Sensoren 8, 9 bzw. Stellglieder 13, 14 ermöglicht.

Gemäss Fig. 1 können das Gebäude 1 und die Fernüberwachungs-Zentrale 20 auch über ein öffentliches mobiles Fernmeldenetz 24 miteinander verbunden sein. In diesem Fall sind ein Modem 48, bspw. ein GSM Modem und eine GSM SIM-Karte in der Schnittstelle 17 vorgesehen (siehe Fig. 5), die für die mobile Telekommunikation sorgen. Vorzugsweise wird die Software der GSM Karte mit Kodierungssystemen ausgerüstet, um sie so vom Missbrauch zu schützen. Die durch die Schnittstelle 17 bewerkstelligte mobile Telekommunikation ermöglicht bspw., dass ein Wartungstechniker vor der persönlichen Präsenz im Gebäude 1 per Handy, GSM oder Laptop eine Kontrolle und Diagnose der Funktionalität der Einrichtungen 11, 12 bzw. Sensoren 8, 9 bzw. Stellglieder 13, 14 ausführen kann. Über das Fernmeldenetz 16, 24 kann die Schnittstelle 17 an Ethernet oder Firewire angeschlossen und somit fernüberwacht und - programmiert werden.

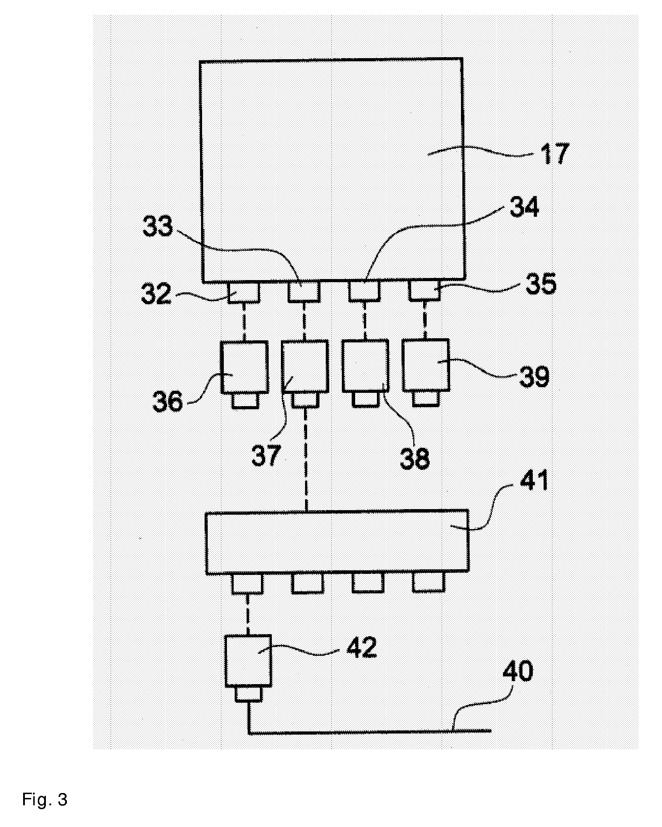

Fig. 3 zeigt ein Blockdiagramm einer möglichen Konfiguration von USB Steckern, die an einer erfindungsgemässen Schnittstelle 17 angeschlossen werden können. Es wird auch erläutert, wie eine Fernüberwachungs-Funktion aktiviert wird:
Zu Beginn besitzt die Schnittstelle 17 vier USB Stecker 32-35. Der USB Stecker 32 steht in Verbindung mit einem seriellen Adapter 36, die die Signale der Einrichtung aufnimmt. Das Kommunikationsprotokoll ist beispielsweise RS232 (Recommended Standard 232). Der USB Stecker 33 steht in Verbindung mit einem Hub Adapter 37 (Verkehrsknotenpunkt). Der USB Stecker 34 steht in Verbindung mit einem Netzwerk Adapter 38, die für das Kommunikationsprotokoll Ethernet vorgesehen ist. Der USB Stecker 35 steht in Verbindung mit einem Modem Adapter 39, die für die Verbindung mit dem Fernmeldenetz sorgt. Mögliche Fernmeldenetzwerke sind: PSTN (Public Switched Telephone Network), ISDN (Integrated Service Digital Network), GSM (Global System Mobile Communication), DSL (Digital Subscriber Line).

Fig. 4 zeigt ein zweites Ausführungsbeispiel der Schnittstelle 17 in Form eines intelligenten Kabels 43 oder intelligenten Steckers 44. In diesem Fall liegt die Schnittstelle 17 zusammen mit den Kabeln, welche zu bzw. von ihr weg führen. Die Schnittstelle 17 ist leicht austauschbar mit der Einrichtung 11, 12 verbunden und kann so einfach und schnell auf eine praktische Weise ausgetauscht werden.

Fig. 5 zeigt ein drittes Ausführungsbeispiel einer Schnittstelle 17 mit mehreren Modulen. Ein Steckrahmen 45 wirkt als Hülle. Der Prozessor (CPU) und die verschiedenen seriellen Schnittstellen, wie USB, der Stecker RS232, das Modem 48, der Ethernet Anschluss, sowie der LON werden als separate unabhängige Module 46 gebaut und in den Steckrahmen 45 eingeschoben. Für die Kommunikation zwischen diesen separaten Modulen 46 sorgt ein Bus Modul 47, das auch in den Steckrahmen 45 eingeschoben wird und mehrere Steckerstifte aufweist, um sich mit den Steckern der Module 46 zu verbinden. Durch das Bus Modul 47 wird eine serielle Kommunikation durch einen Bus zwischen den Modulen 46 erzielt, die sich als besonders flexibel und frei in der Konfiguration auszeichnet. Gleichzeitig ist in der Steckerleiste des Bus Moduls 47 die Stromversorgung mittels separaten Kontakten integriert.

Der modulare Aufbau der Schnittstelle 17 gemäss Fig. 5 hat praktische Vorteile. Die Module 46 können beliebig ein- und heraus geschoben werden, ohne dass die Funktionalität der Schnittstelle 17 beeinträchtigt wird und ohne dass es eine neue Konfigurierung der Schnittstelle 17 bedarf.

Vorteilhafterweise wird die Schnittstelle 17 gemäss Fig. 5 in ein dickes weiches entfernbares Gummigehäuse eingelegt, das leicht montierbar und tropfwasserdicht ist. Das Gummigehäuse schützt vor Schläge, Feuchtigkeit und ist ästhetisch angenehm. Das Gummigehäuse lässt sich, je nach Betriebs- und Umgebungs-Anforderungen, in verschiedenen Ausführungen realisieren.

Vorteilhafterweise ist auch eine automatische Erfassung von Messdaten vorgesehen. Messdaten werden gemäss vordefinierten Kriterien aufgenommen, zu Datenblöcken zusammengestellt und gemäss vorgegebenen standardisierten Regeln an die Fernüberwachungs-Zentrale 20 übermittelt.

Die Fernüberwachungs-Funktion umfasst diagnostische Daten, die einen bestimmten Teil oder eine Funktion einer Einrichtung 11, 12 bzw. eines Sensors 8, 9 bzw. eines Stellgliedes 13, 14 betreffen, welche an die Fernüberwachungs-Zentrale 20 übermittelbar und dort weiterverarbeitbar sind. Das Laden der Software kann durch das Fernmeldenetz 16, 24 oder direkt durch eine beliebige lokale Verbindung mit einer Rechnereinheit (PC) erfolgen. Wenn im Datenspeicher der Schnittstelle 17 eine solche Fernüberwachungs-Funktion bereits gespeichert ist, so kann diese bspw. durch Anwählen in einem Software in den Prozessor geladen und somit aktiviert werden. Die Fernüberwachungs-Funktion ist eine Art "Übersetzer" zwischen den Einrichtungen 11, 12 bzw. Sensoren 8, 9 bzw. Stellgliedern 13, 14 und der Fernüberwachungs-Zentrale 20 und hat den Vorteil, dass Einrichtungen 11, 12 bzw. Sensoren 8, 9 bzw. Stellgliedern 13, 14 von der Fernüberwachungs-Zentrale 20 aus mit standardisierten Routinen ansprechbar sind. Als Standard der zweiten Signale dient dabei die Sprache der Fernüberwachungszentrale 20, d.h. die Gesamtheit der Befehle und Befehlsfolgen der Routinen der Fernüberwachungszentrale 20. Die ersten Signale der Einrichtung 11, 12 können in einer beliebigen anderen proprietären Sprache dieser Einrichtung 11, 12 vorliegen. Eine dedizierte Fernüberwachungs-Funktion übersetzt bzw. wertet erste Signale der Einrichtungen 11, 12 so aus, dass diese von standardisierten Routinen verstanden, d.h. als standardisierte zweite Signale von der Fernüberwachungs-Zentrale 20 verstanden wird. Umgekehrt übersetzt bzw. wertet die Fernüberwachungs-Funktion standardisierte zweite Signale der Fernüberwachungs-Zentrale 20 so aus, dass diese von den Einrichtungen 11, 12 bzw. Sensoren 8, 9 bzw. Stellgliedern 13, 14 als proprietäre Befehle in Form von ersten Signalen verstanden werden.

Im Folgenden werden einige Anwendungsbeispiele des System zur Fernüberwachung von Einrichtungen 11, 12 beschrieben:
a) Nehmen wir an, dass im Gebäude eine Einrichtung "Zutrittskontrollanlage" bzw. "Gefahrenmeldeanlage zum Erkennen von Einbruch, Diebstahl, Schaden durch Feuer, Rauch und Wasser" über die Schnittstelle 17 von der Fernüberwachungs-Zentrale 20 fernüberwacht wird (siehe Schema gemäss Fig. 1). Erste Signale der "Verfügbarkeit" dieser Einrichtungen werden als elektrischer Spannungspegel von "0V" bzw. "10V" an Eingänge 19 der Schnittstelle 17 gelegt. Bspw. besteht die Zutrittskontrollanlage aus einem Kartenleser, welcher bei voller Funktionsfähigkeit einen elektrischen Spannungspegel von "10V" und bei defekt einen elektrischer Spannungspegel von "0V" als erstes Signal an einen Eingang 19 der Schnittstelle 17 ausgibt. In Analogie geben batteriegestützte Rauchmelder bei erschöpften Batterien einen elektrischen Spannungspegel kleiner "4.5V" an einen Eingang 19 der Schnittstelle 17 aus, während sie bei einem elektrischen Spannungspegel grösser bzw. gleich "4.5V" an einen Eingang 19 der Schnittstelle 17 voll funktionsfähig sind. Eine aktivierte Fernüberwachungs-Funktion "Fernüberwachung der Verfügbarkeit" wertet die an den Eingängen 19 anliegenden erste Signale aus und übersetzt diese elektrischen Spannungspegel in für die Fernüberwachungs-Zentrale 20 verständliche digitale Worte wie "defekt" bzw. "voll funktionsfähig". Bspw. wird der elektrische Spannungspegel "0V" dem digitalen Wort "defekt" und der elektrische Spannungspegel grösser bzw. gleich "4.5V" den digitalen Worten "voll funktionsfähig" gleich gesetzt. Diese in den Standard der Fernüberwachungs-Zentrale 20 übersetzten Werte gibt die Schnittstelle 17 am Ausgang 15 als zweite Signale an das Fernmeldenetz 16, 24 ab. Die Fernüberwachungs-Zentrale 20 kann so die Verfügbarkeit der Einrichtung "Zutrittskontrollanlage" bzw. "Gefahrenmeldeanlage zum Erkennen von Einbruch, Diebstahl, Schaden durch Feuer, Rauch und Wasser" durch Starten einer standardisierten Routine von Ferne aus überwachen. Bspw. startet die Fernüberwachungs-Zentrale 20 über das Fernmeldenetz 16, 24 eine entsprechende Anfrage als zweite Signale an die Schnittstelle 17, welche daraufhin die an den Eingängen 19 anliegenden ersten Signale auswertet und ein dem Ergebnis der Auswertung entsprechendes zweites Signal über den Ausgang 15 an das Fernmeldenetz 16, 24 ausgibt. Bei Vorliegen einer Störung kann die Fernüberwachungs-Zentrale 20 weiter unten beschriebene Schritte der Störungsbehebung bzw. Wartung in die Wege leiten.
b) Als zweites Anwendungsbeispiel wird eine Einrichtung "Klimaanlage" beschrieben, welche in einem Gebäude 1 installiert ist und über die Schnittstelle 17 von der Fernüberwachungs-Zentrale 20 fernüberwacht wird (siehe Schema gemäss Fig. 1). Dazu werden erste Signale von Sensoren für "Temperatur" und "Luftfeuchtigkeit" als elektrische Spannungen oder elektromagnetische Frequenzen an Eingänge 19 der Schnittstelle 17 gelegt. Ein Stellglied "Leistung" der Einrichtung "Klimaanlage" ist über weitere erste Signale in Form einer elektrischen Spannung wie "8V" bzw. "3V" an einem weiteren Eingang 19 der Schnittstelle 17 ansteuerbar. Eine aktivierte Fernüberwachungs-Funktion "Fernüberwachung der Klimaanlage" wertet die an den Eingängen 18 anliegenden erste Signale aus. So übersetzt die Fernüberwachungs-Funktion "Fernüberwachung der Klimaanlage" die elektrische Spannungen oder elektromagnetische Frequenzen der Sensoren für "Temperatur" und "Luftfeuchtigkeit" in für die Fernüberwachungs-Zentrale 20 verständliche Temperaturwerte wie "18°C" bzw. "25°C" bzw. in Feuchtigkeitswerte wie "50%" bzw. 80%". Diese in den Standard der Fernüberwachungs-Zentrale 20 übersetzten Werte gibt die Schnittstelle 17 am Ausgang 15 als zweite Signale an das Fernmeldenetz 16, 24 ab. Die Fernüberwachungs-Zentrale 20 kann so die Einrichtung "Klimaanlage" durch Starten einer standardisierten Routine von Ferne aus überwachen. Die Fernüberwachungs-Zentrale 20 wertet diese übermittelten zweiten Signale aus und kann die Leistung der Einrichtung "Klimaanlage" gemäss vorgegebenen Kriterien regeln. Bspw. sollen die Temperatur und die Luftfeuchtigkeit bestimmte Grenzwerte weder über- noch unterschreiten. Tritt dies jedoch ein, so kann die Fernüberwachungs-Zentrale 20 Steuerbefehle als zweite Signale an den Ausgang 15 der Schnittstelle 17 übermitteln. Die Schnittstelle 17 übersetzt einen Steuerbefehl "Leistung drosseln" in einen Befehl "5V" und legt anstatt einer Spannung von "6V" nun eine "5V" als weiteres erstes Signal an den weiteren Eingang 18 des Stellglieds "Leistung" der Einrichtung "Klimaanlage", wodurch die Leistung der Einrichtung "Klimaanlage" gedrosselt wird.
c) In einem dritten Anwendungsbeispiel wird das Gebäude 1 eine Fernüberwachungs-Funktion "Fernüberwachung der Verfügbarkeit einer Kühltruhe" der Schnittstelle 17 von der Fernüberwachungs-Zentrale 20 fernüberwacht (siehe Schema gemäss Fig. 1). Die Aktivierung dieser Fernüberwachungs-Funktion erfolgt durch den Einsatz von Hardware bzw. Software. Die Einrichtung "Kühltruhe" ist mit einem Sensor "Thermometer" versehen, welcher über eine Leitung an einen Eingang 19 der Schnittstelle 17 angeschlossen ist. Die aktivierte Fernüberwachungs-Funktion "Fernüberwachung der Verfügbarkeit einer Kühltruhe" wertet am Eingang 19 anliegende erste Signale aus, die bspw. zur Temperatur in der Kühltruhe proportionale elektrische Spannungen des Sensors "Temperatur" sein können und gibt über einen Ausgang 15 entsprechende zweite Signale an das Fernmeldenetz 16, 24 aus, wie bspw. einen Wert "-20°C" oder ein oder mehrere digitale Worte "defekt" bzw. "voll funktionsfähig", welche in der standardisierten Sprache der Fernüberwachungs-Zentrale 20 sind und somit von dieser verstanden werden. Die Fernüberwachungs-Zentrale 20 wiederum kann nun in Abständen vorteilhafterweise in regelmässigen Abständen, die Verfügbarkeit der Einrichtung "Kühltruhe" durch Starten einer standardisierten Routine von Ferne aus überwachen. Bspw. startet die Fernüberwachungs-Zentrale 20 über das Fernmeldenetz 16, 24 eine entsprechende Anfrage als zweite Signale an die Schnittstelle 17, welche daraufhin die am Eingang 19 anliegenden ersten Signale auswertet und ein dem Ergebnis der Auswertung entsprechendes zweites Signal über den Ausgang 15 an das Fernmeldenetz 16, 24 ausgibt.
d) In einem vierten Beispiel wird eine Einrichtung "Waschmaschine" in einem Gebäude 1 über die Schnittstelle 17 von der Fernüberwachungs-Zentrale 20 fernüberwacht (siehe Schema gemäss Fig. 1). Hierzu wird in der Schnittstelle 17 eine Fernüberwachungs-Funktion "Fernüberwachung der Verfügbarkeit einer Waschmaschine" aktiviert. Ein in der Einrichtung "Waschmaschine" standardmässig eingebauter Sensor "Strommeter" liefert erste Signale an einen ersten Eingang 19 der Schnittstelle 17. Binär kodierte Zustandsdaten der Einrichtung "Waschmaschine" wie "Programm 5" bzw. "Programm 18" werden als weitere erste Signale an einen weiteren Eingang 18 der Schnittstelle 17 übermittelt. Die aktivierte Fernüberwachungs-Funktion "Fernüberwachung der Verfügbarkeit einer Waschmaschine" wertet die an den Eingängen 18, 19 anliegende erste Signale aus. Diese dedizierte Fernüberwachungs-Funktion übersetzt vom Sensor "Strommeter" gelieferten elektrische Spannungen in Werte der momentanen Leistungsaufnahme wie "10%" oder "120%" der Einrichtung "Waschmaschine" sowie übersetzt die von der Einrichtung "Waschmaschine" gelieferten Zustandsdaten in Werte des momentanen Waschprogrammstatus wie "Vorwäsche" bzw. "Schleudern". Diese in den Standard der Fernüberwachungs-Zentrale 20 übersetzten Werte gibt die Schnittstelle 17 am Ausgang 15 als zweite Signale an das Fernmeldenetz 16, 24 ab. Die Fernüberwachungs-Zentrale 20 kann so die Verfügbarkeit der Einrichtung "Waschmaschine" durch Starten einer standardisierten Routine von Ferne aus überwachen. Bspw. startet die Fernüberwachungs-Zentrale 20 über das Fernmeldenetz 16, 24 eine entsprechende Anfrage als zweite Signale an die Schnittstelle 17, welche daraufhin die an den Eingängen 18, 19 anliegenden ersten Signale auswertet und ein dem Ergebnis der Auswertung entsprechendes zweites Signal über den Ausgang 15 an das Fernmeldenetz 16, 24 ausgibt.
e) In einem fünften Beispiel werden eine Vielzahl von Einrichtungen "Leuchten" in einem Gebäude 1 über die Schnittstelle 17 von der Fernüberwachungs-Zentrale 20 fernüberwacht (siehe Schema gemäss Fig. 1). In den zu überwachenden Räumen mit Einrichtungen "Leuchten" sind Helligkeitssensoren angeordnet, welche die Helligkeit der Einrichtungen "Leuchten" messen und entsprechende elektrische Spannungen zwischen "0V" und "10V" als erste Signale an Eingänge 19 der Schnittstelle 17 liefern. Eine aktivierte Fernüberwachungs-Funktion "Fernüberwachung der ausreichenden Helligkeit in Räumen" wertet die an den Eingängen 19 anliegenden ersten Signale aus und übersetzt diese elektrischen Spannungen in für die Fernüberwachungs-Zentrale 20 verständliche digitale Worte wie "Leuchten ausgefallen" bei elektrischen Spannungen kleiner "3.5V" bzw. "Helligkeit ausreichend" bei elektrischen Spannungen grösser gleich "3.5V". Die Fernüberwachungs-Zentrale 20 kann so die Verfügbarkeit der Einrichtungen "Leuchten" durch Starten einer standardisierten Routine von Ferne aus überwachen. Bspw. startet die Fernüberwachungs-Zentrale 20 über das Fernmeldenetz 16, 24 eine entsprechende Anfrage als zweite Signale an die Schnittstelle 17, welche daraufhin die an den Eingängen 19 anliegenden ersten Signale auswertet und ein dem Ergebnis der Auswertung entsprechendes zweites Signal über den Ausgang 15 an das Fernmeldenetz 16, 24 ausgibt.

Wie in diesen Anwendungsbeispielen gezeigt, ist das System zur Fernüberwachung auf rasche, billige und einfache Weise fähig, Einrichtungen 11, 12 im Gebäude 1 aus der Ferne zu überwachen. Diese Flexibilität und Schnelligkeit in der Konfiguration der durch die Schnittstelle 17 ermöglichten Fernüberwachungs-Funktionen haben keinen Präzedenzfall im Stand der Technik.

Die Fernüberwachungs-Zentrale 20 wertet die von der Schnittstelle 17 übermittelten zweiten Signale aus und kann bei Auftreten von Störungen entsprechende Schritte in die Wege leiten. Bspw. liegt im Anwendungsbeispiel d) dann eine Störung der Einrichtung "Waschmaschine" vor, wenn der Werte der momentanen Leistungsaufnahme sowie der Werte des momentanen Waschprogrammstatus von vorbestimmten Erwartungswerten abweichen. So kann eine Störung vorliegen, wenn in einem Waschprogrammstatus "Kaltwäsche", bei dem erwartungsgemäss kein grosser Strom von der Einrichtung "Waschmaschine" gezogen wird, eine hohe momentane Leistungsaufnahme von "100%" erfolgt.

Aus Erfahrung weiss die Fernüberwachungs-Zentrale 20, dass in einem solchen Fall eine Verkalkung vorliegt, die sich früher oder später zu einem mehr oder weniger gravierenden Schädigung der Einrichtung "Waschmaschine" führt und kann präventiv entsprechende Wartungsmassnahmen einleiten. Die Zustellung einer Wartungsanleitung kann auch als direkte Folge einer Störungsmeldung erzeugt werden. Bspw. wird er Besitzer der Einrichtung "Waschmaschine" über die Störung informiert bzw. ein Wartungstechniker wird mit einer Wartungsanleitung instruiert, die Einrichtung "Waschmaschine" zu warten. Die Wartungsanleitung kann auch an die Schnittstelle 17 übermittelt werden. Abhängig vom aktuellen Zustand und Betriebsbereitschaft der Einrichtung "Waschmaschine" werden die zur Wartung und/oder Reparatur notwendigen Anleitungen von der Fernüberwachungs-Zentrale 20 an die Schnittstelle 17 zugestellt. Der im Gebäude 1 eintreffende Wartungstechniker kann diese dann mit Hilfe eines Datensichtgeräts einsehen und die notwendigen Arbeiten unverzüglich ausführen. Die Ausführung der Anweisungen kann durch den Wartungstechniker bestätigt werden und wird anschliessend automatisch der Fernüberwachungs-Zentrale 20 mitgeteilt.

Vorteilhafterweise erfolgt die routinemässige Übermittlung von Messdaten an die Fernüberwachungs-Zentrale 20 zeitlich so geordnet, dass minimale kosten für die Verbindung entstehen. Dazu werden die jeweils aktuell geltenden Tarife an die Schnittstelle 17 übermittelt, oder von dieser abgerufen, und eine Planung der Übertragung unter Berücksichtigung allfälliger Prioritäten und einzuhaltender Lieferzeiten der Nachrichten durchgeführt. Die Übermittlung erfolgt dann entsprechend dieser Planung.

Die Schnittstelle 17 kann bspw. Stress-Tests initiieren, d.h. die automatische Ermittlung der Robustheit, Verfügbarkeit und Leistungsfähigkeit der Einrichtung 11, 12 testen. Dazu werden von der Schnittstelle 17 Test-Aufträge generiert, an die Einrichtung 11, 12 übermittelt und die Abarbeitung dieser Test-Aufträge registriert. Das Ergebnis des Stress-Tests kann der Fernüberwachungs-Zentrale 20 zur Weiterverarbeitung mitgeteilt werden.

Die Schnittstelle 17 kann bspw. auch automatische Tests initiieren. Die Quittierung von Störungsmeldung hat automatisch die Auslösung einer entsprechenden Testsequenz zur Prüfung der Störungsbehebung zur Folge. Die Art und Weise des ausgeführten Tests kann etwa vom Inhalt der zugehörigen Störungsmeldung abhängig gemacht werden.

Die Betriebs-Parameter lassen sich auch durch die Schnittstelle 17 anpassen und optimieren. So werden während des Betriebs der Einrichtung 11, 12 anfallende Daten gesammelt und an die Fernüberwachungs-Zentrale 20 zur Auswertung übermittelt. Die Auswertung einer bestimmten grossen Anzahl von Daten anderer ähnlicher oder gleicher Einrichtungen liefert vorteilhafte Betriebs-Parameter. Solch vorteilhaften Betriebs-Parameter werden dann den Schnittstellen 17 der Einrichtungen zum weiteren Betrieb automatisch übermittelt. In konkreter Ausführung können etwa Angaben zum Ausfall einer Einrichtung 11, 12 dazu verwendet werden, eine in Bezug auf statistische Grössen optimale Teststrategie zu erzielen. Dazu werden Ausfälle anlagenspezifisch erfasst, in der Fernüberwachungs-Zentrale 20 Betriebs-Parameter zur Beschreibung der Ausfallwahrscheinlichkeit der Einrichtung 11, 12 ermittelt und diese dann der Schnittstelle 17 zur Anpassung der Teststrategie übermittelt.

## Patentansprüche

1. Schnittstelle (17) zur Fernüberwachung mindestens einer Einrichtung (11, 12) zur Zutrittskontrolle zu einem Gebäude (1) bzw. zur Zutrittskontrolle zu Räumen in einem Gebäude (1) bzw. zur Fernüberwachung mindestens einer Einrichtung (11, 12) zum Heizen bzw. Lüften bzw. Klimatisieren eines Gebäudes (1) bzw. zur Fernüberwachung mindestens einer Einrichtung (11, 12) zum Erkennen und Melden von Einbruch bzw. Diebstahl bzw. Schaden durch Feuer bzw. Rauch bzw. Wasser in einem Gebäude (1) bzw. zur Fernüberwachung mindestens einer Einrichtung (11, 12) zum Führen von Personen in einem Gebäude (1) bzw. zur Fernüberwachung mindestens einer Einrichtung (11, 12) zur Durchführung von Haushaltsarbeiten in Küche bzw. Bad eines Gebäudes (1) bzw. zur Fernüberwachung mindestens einer Einrichtung (11, 12) zur Darbietung von Multimedia bzw. zur Text- und Datenverarbeitung in einem Gebäude (1), welche Schnittstelle (17) mindestens einen Eingang für erste Signale von der bzw. zur Einrichtung (11, 12), mindestens einen Ausgang für zweite Signale von bzw. zu mindestens einem Fernmeldenetz (16, 24), und mindestens einen Prozessor aufweist, welcher Prozessor mindestens eine aktivierte Fernüberwachungs-Funktion ausführt.

2. Schnittstelle (17) gemäss Patentanspruch 1, **dadurch gekennzeichnet, dass** die Fernüberwachungs-Funktion die Hardware bzw. Software der Einrichtung (11, 12) konfiguriert bzw. überwacht bzw. wartet.

3. Schnittstelle (17) gemäss Patentanspruch 1 oder 2, **dadurch gekennzeichnet, dass** die Schnittstelle (17) mindestens einen Datenspeicher aufweist, dass im Datenspeicher mehrere Fernüberwachungs-Funktionen gespeichert sind und dass eine Fernüberwachungs-Funktion durch Laden aus dem Datenspeicher in den Prozessor aktivierbar ist.

4. Schnittstelle (17) gemäss einem der Patentansprüche 1 bis 3, **dadurch gekennzeichnet, dass** eine aktivierte Fernüberwachungs-Funktion erste Signale der Einrichtung (11, 12) auswertet und ein dem Ergebnis der Auswertung entsprechendes zweites Signal an das Fernmeldenetz (16, 24) ausgibt.

5. Schnittstelle (17) gemäss einem der Patentansprüche 1 bis 4, **dadurch gekennzeichnet, dass** eine aktivierte Fernüberwachungs-Funktion zweite Signale des Fernmeldenetzes auswertet und ein dem Ergebnis der Auswertung entsprechendes erstes Signal an die Einrichtung (11, 12) ausgibt.

6. Schnittstelle (17) gemäss einem der Patentansprüche 1 bis 5, **dadurch gekennzeichnet, dass** für verschiedene proprietäre Einrichtungen (11, 12) verschiedene dedizierte Fernüberwachungs-Funktionen vorgesehen sind, dass für jede an einen Eingang der Schnittstelle (17) angeschlossene proprietäre Einrichtung (11, 12) eine dedizierte Fernüberwachungs-Funktion durch Laden in den Prozessor aktiviert ist.

7. Schnittstelle (17) gemäss einem der Patentansprüche 1 bis 6, **dadurch gekennzeichnet, dass** an einer Vielzahl von Eingängen mehrere Einrichtungen(11, 12) bzw. Sensoren (8, 9) bzw. Stellglieder (13, 14) angeschlossen sind und dass jeder Einrichtung (11, 12) eine entsprechende Fernüberwachungs-Funktionen zugeordnet ist.

8. Schnittstelle (17) gemäss Patentanspruch 7, **dadurch gekennzeichnet, dass** die Sensoren (8, 9) Sensoren für Temperatur bzw. Druck bzw. Luftfeuchtigkeit bzw. biometrische Benutzerdaten bzw. Detektoren für elektromagnetische Strahlung aller Art bzw. Bewegungsmelder bzw. Rauchmelder sind.

9. Schnittstelle (17) gemäss einem der Patentansprüche 1 bis 8, **dadurch gekennzeichnet, dass** die Schnittstelle (17) in einem Gehäuse bzw. einem Kabel bzw. einem intelligenten Stecker dissimuliert ist.

10. Schnittstelle (17) gemäss einem der Patentansprüche 1 bis 9, **dadurch gekennzeichnet, dass** die Schnittstelle(17) modular aufgebaut ist, wobei verschiedene Module für Eingänge bzw. Ausgänge bzw. den Prozessor bzw. einen Datenspeicher sowie ein Bus-Modul in einen Steckrahmen einschiebbar sind und das Bus-Modul eine Kommunikation zwischen den Modulen ermöglicht.

11. System mit einer Schnittstelle (17) gemäss einem der Patentansprüche 1 bis 9, **gekennzeichnet durch** mindestens eine Fernüberwachungs-Zentrale (20), die über das Fernmeldenetz mit der Schnittstelle (17) verbunden ist.

12. Verfahren zur Fernüberwachung mindestens einer Einrichtung (11, 12) zur Zutrittskontrolle zu einem Gebäude (1) bzw. zur Zutrittskontrolle zu Räumen in einem Gebäude (1) bzw. zur Fernüberwachung mindestens einer Einrichtung (11, 12) zum Heizen bzw. Lüften bzw. Klimatisieren eines Gebäudes (1) bzw. zur Fernüberwachung mindestens einer Einrichtung (11, 12) zum Erkennen und Melden von Einbruch bzw. Diebstahl bzw. Schaden durch Feuer bzw. Rauch bzw. Wasser in einem Gebäude (1) bzw. zur Fernüberwachung mindestens einer Einrichtung (11, 12) zum Führen von Personen in einem Gebäude (1) bzw. zur Fernüberwachung mindestens einer Einrichtung (11, 12) zur Durchführung von Haushaltsarbeiten in Küche bzw. Bad eines Gebäudes (1) bzw. zur Fernüberwachung mindestens einer Einrichtung (11, 12) zur Darbietung von Multimedia bzw. zur Text- und Datenverarbeitung in einem Gebäude (1), mit den Schritten: über mindestens einen Eingang einer Schnittstelle (17) werden erste Signale von der bzw. zur Einrichtung (11, 12) übermittelt, über mindestens einen Ausgang der Schnittstelle (17) werden zweite Signale von bzw. zu mindestens einem Fernmeldenetz (16, 24) übermittelt, und in mindestens einem Prozessor der Schnittstelle (17) wird mindestens eine aktivierte Fernüberwachungs-Funktion ausgeführt.

13. Verfahren gemäss Patentanspruch 12, **dadurch gekennzeichnet, dass** von der Schnittstelle (17) von der Einrichtung (11, 12) erste Signale empfangen werden, dass diese ersten Signale von der aktivierten Fernüberwachungs-Funktion ausgewertet werden und dass ein dem Ergebnis der Auswertung entsprechendes standardisiertes zweites Signal an das Fernmeldenetz (16, 24) ausgegeben wird.

14. Verfahren gemäss Patentanspruch 12 oder 13, **dadurch gekennzeichnet, dass** von der Schnittstelle (17) vom Fernmeldenetz (16, 24) standardisierte zweite Signale empfangen werden, dass diese zweiten Signale von der aktivierten Fernüberwachungs-Funktion ausgewertet werden und dass ein dem Ergebnis der Auswertung entsprechendes erstes Signal an die Einrichtung (11, 12) ausgegeben wird.

15. Verfahren gemäss einem der Patentansprüche 12 bis 14, **dadurch gekennzeichnet, dass** über das Fernmeldenetz (16, 24) standardisierte zweite Signale zwischen der Schnittstelle (17) und mindestens einer Fernüberwachungs-Zentrale (20) übermittelt werden.

16. Verfahren gemäss einem der Patentansprüche 12 bis 15, **dadurch gekennzeichnet, dass** mehrere Einrichtungen (11, 12) über ein Modem (48) der Schnittstelle (17) von der Fernüberwachungs-Zentrale (20) gewartet werden.

17. Verfahren gemäss einem der Patentansprüche 12 bis 16, **dadurch gekennzeichnet, dass** sich die Schnittstelle (17) nach Inbetriebnahme automatisch konfiguriert bzw. von selbst lernt, welchem Eingang bzw. Ausgang welches Signal entspricht.
